Europäisches Patentamt

(19) European Patent Office

Office européen des brevets

(11) Numéro de publication: **0 086 681**
**B1**

(12) **FASCICULE DE BREVET EUROPEEN**

(45) Date de publication du fascicule du brevet:
17.04.85

(21) Numéro de dépôt: 83400094.5

(22) Date de dépôt: 14.01.83

(51) Int. Cl.⁴: **E 04 B 1/76, E 04 F 13/04**

(54) **Revêtement thermiquement isolant appliqué sur les murs de bâtiments et son procédé d'application.**

(30) Priorité. 22.01.82 FR 8200957

(43) Date de publication de la demande:
24.08.83 Bulletin 83/34

(45) Mention de la délivrance du brevet:
17.04.85 Bulletin 85/16

(84) Etats contractants désignés:
AT BE CH DE GB LI LU NL SE

(56) Documents cités:
DE - A - 1 811 316
DE - A - 2 645 099
FR - A - 1 405 762
FR - A - 2 203 919
FR - A - 2 442 808
US - A - 4 292 783
(73) Titulaire: **Gachot, Jean, 26 bis, avenue de Paris,
F-95230 Soisy sous Montmorency (FR)**

(72) Inventeur: **Gachot, Jean, 26 bis, avenue de Paris,
F-95230 Soisy sous Montmorency (FR)**

(74) Mandataire: **Bouju, André, 38 Avenue de la Grande
Armée, F-75017 Paris (FR)**

**Description**

La présente invention concerne un revêtement thermiquement isolant appliqué contre l'extérieur ou l'intérieur des murs de bâtiments tels que des maisons d'habitation ou des usines.

L'invention vise également le procédé pour appliquer ce revêtement contre les murs précités.

On connaît un revêtement thermiquement isolant comprenant des plaques en polystyrène expansé fixées aux murs par une couche d'un mélange de résine synthétique et de ciment, ces plaques étant recouvertes par une autre couche du mélange précité.

Ces plaques sont disposées les unes contre les autres, sans interstices entre leurs bords.

Sur la couche qui recouvre l'extérieur des plaques est appliquée une armature par exemple en tissu de fibres de verre dont le rôle est d'encaisser les variations dimensionnelles des plaques de polystyrène et d'éviter la formation de fissures au droit des bords des plaques.

Cette armature en tissu de fibres de verre est recouverte par une seconde couche de mélange résine synthétique-ciment qui est elle-même revêtue par un enduit extérieur d'étanchéité.

L'inconvénient d'un tel revêtement réside essentiellement dans l'obligation d'utiliser l'armature précitée. Cette armature augmente considérablement le temps de main-d'œuvre nécessaire pour exécuter le revêtement et de ce fait, grève d'une manière substantielle le coût total du revêtement et donc de l'isolation.

Par ailleurs, le mélange résine synthétiqueciment utilisé pour fixer et recouvrir les plaques de polystyrène présente des propriétés d'isolation thermique médiocres et influence donc défavorablement les qualités recherchées du revêtement.

Le but de la présente invention est de remédier à cet inconvénient en créant un revêtement à base de plaques de matière isolante qui évite l'utilisation d'une armature du genre de celle précitée.

Le revêtement visé par l'invention appliqué à l'extérieur des murs de bâtiments comprend des plaques en matière isolante fixées aux murs par une couche de matière adhésive comprenant une résine synthétique et au moins un liant hydraulique, ces plaques étant recouvertes à l'extérieur par une autre couche de cette matière.

Suivant l'invention, ce revêtement est caractérisé en ce que cette matière comprend des composés capables de lui conférer une élasticité suffisante pour encaisser les variations dimensionnelles des plaques et en ce que cette matière remplit également les interstices compris entre les bords adjacents des plaques de façon à encadrer les plaques et à relier directement le mur, les plaques et la couche extérieure.

Du fait de l'élasticité et de la résistance mécanique de cette matière qui recouvre les deux faces opposées des plaques et qui les ceinture, les variations dimensionnelles des plaques sont directement encaissées par cette matière, de sorte que l'utilisation d'une armature de renforcement telle qu'un tissu de fibres de verre devient inutile.

Le coût du revêtement en matière première et en main-d'œuvre est ainsi considérablement réduit par rapport à celui des réalisations connues, du fait qu'il peut être posé sans interruption due au séchage.

Les plaques en matière isolante sont de préférence en polystyrène expansé mais peuvent également être constituées par de la mousse rigide de polyuréthane, ou autre matière isolante, telle que la laine de roche, ou la mousse de verre dont la densité est de l'ordre de 0,3.

Selon une version préférée de l'invention, la matière adhésive comprend des composés qui, au moment de l'application de cette matière, réagissent ensemble pour former des bulles de gaz.

Ces bulles de gaz formées au sein de la matière, lors du durcissement de cette dernière, confèrent à cette matière l'élasticité désirée, en plus d'une bonne résistance mécanique. De plus, ces bulles de gaz permettent à la matière d'avoir d'excellentes propriétés d'isolation thermique, contrairement au cas des mélanges de résine synthétique et de ciment utilisés auparavant. Cette couche est également étanche aux liquides et aux gaz.

Cette matière peut être du genre de celle décrite dans le brevet français n° 2 442 808.

Selon le procédé visé par l'invention, pour réaliser le revêtement précité, on applique, par projection par exemple, une couche de la matière précitée sur les murs du bâtiment, on pose les plaques en matière isolante contre cette couche, en laissant des interstices entre les bords des plaques, variant, suivant l'épaisseur des plaques entre 1 et 3 mm, on remplit ces interstices par cette matière et on recouvre la surface extérieure des plaques par une couche continue de cette matière, de 1 à 3 mm d'épaisseur.

Ce procédé est particulièrement simple et rapide à exécuter, étant donné que la matière utilisée sert à la fois à coller les plaques contre les murs et à les recouvrir extérieurement. De plus, elle joue aussi le rôle d'armature de renforcement reliant directement le mur à la couche extérieure assurant ainsi la stabilité du revêtement, même dans le cas où les plaques présentent des surfaces très importantes. Ainsi, il n'est pas nécessaire d'incorporer une armature de renforcement dans la couche extérieure, ni de recouvrir cette dernière par un enduit d'étanchéité.

La matière utilisée dans le procédé conforme à l'invention peut être appliquée d'une manière très rapide par projection.

D'autres particularités et avantages de l'invention apparaîtront encore dans la description ciaprès.

Aux dessins annexés, donnés à titre d'exemples non limitatifs:

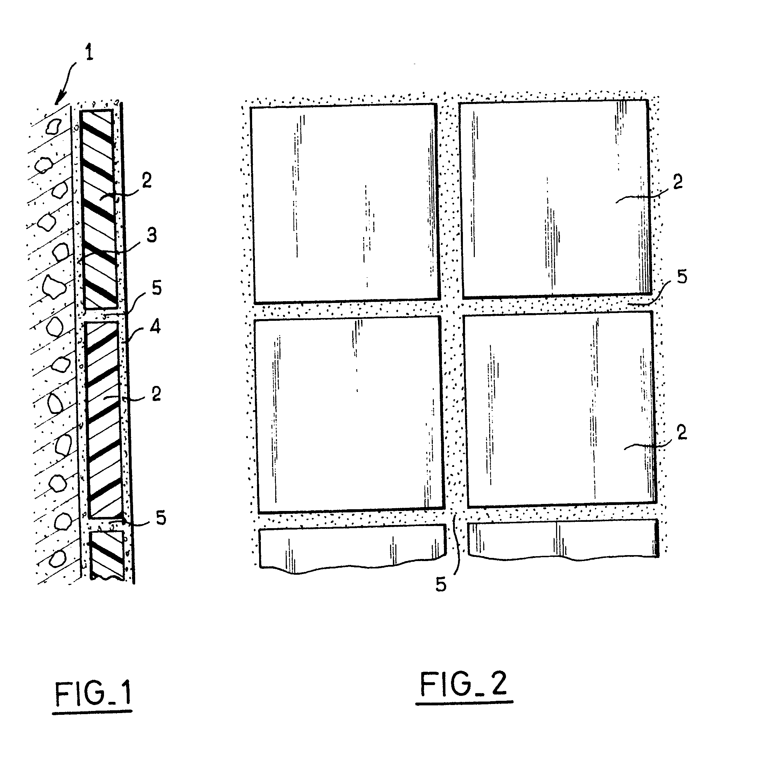

la fig. 1 est une vue en coupe transversale d'un mur portant un revêtement conforme à l'invention;

la fig. 2 est une vue en plan du revêtement, avant l'application de la couche extérieure, faisant apparaître la matière qui remplit les interstices et constituant ainsi une armature de renforcement.

Dans la réalisation représentée sur les figures, le revêtement thermiquement isolant appliqué à l'extérieur du mur 1, en pierres, briques, parpaings ou béton, avec ou sans enduit, comprend des plaques 2 en polystyrène expansé fixées au mur 1 par une couche 3 de matière adhésive et recouvertes extérieurement par une autre couche 4 de cette matière.

Les dimensions des plaques 2 peuvent être de 1 × 1 m ou 1 × 2 m, par exemple.

Conformément à l'invention, la matière constituant les couches 3 et 4 comprend des composés capables de lui conférer une élasticité et une résistance mécanique suffisantes pour encaisser les variations dimensionnelles des plaques 2, sans risques de fissures.

De plus, cette matière remplit les interstices 5 compris entre les plaques 2 et forme un cadre de renforcement, très résistant.

L'élasticité et les propriétés isolantes de cette matière sont obtenues par le fait qu'elle comprend deux composés qui, au moment de l'application de cette matière réagissent ensemble pour former des bulles de gaz au sein de cette matière. Ces deux composés peuvent être respectivement un agent anionique tel que le lauryl éther sulfate de sodium et un alkyl sulfate tel que l'éthyl-hexyl-sulfate de soude.

La résine synthétique soluble dans l'eau contenue dans la matière peut être un copolymère acétate de vinyle-versatate de vinyle ou un terpolymère ester acrylique-versatate de vinyle-acétate de vinyle.

La matière formant les couches 3 et 4 et remplissant les interstices 5 renferme à titre d'exemple les composants liquide et solide ci-après qui sont mélangés juste avant l'utilisation de la matière:

Composant liquide:

| | |
|---|---|
| Résine: | 2 à 20% en poids |
| Lauryl éther sulfate de sodium: | 2 à 10% en poids |
| Fibres minérales: | 10 à 30% en poids |
| Agent de mouillage (nonylphénolpolyoxy-ethylénée): | 1 à 5% en poids |
| Agent stabilisant anti-rouille (cékanoate d'isopropalamine): | 1 à 5% en poids |
| Eau: | 40 à 60% en poids |

Composant solide:

| | |
|---|---|
| Plâtre: | 40 à 60% en poids |
| Ethyl-hexyl-sulfate de soude: | 2 à 10% en poids |
| Sulfate (ou phosphate d'aluminium): | 5 à 10% en poids |
| Méthyl cellulose modifié avec des charges minérales: | 1 à 5% en poids |
| Vermiculite: | 20 à 40% en poids |

Une telle matière a été décrite dans le brevet français n° 2 442 808 dans le cadre de son application à l'isolation phonique et thermique de machines ou de locaux d'habitation.

Pour réaliser le revêtement thermiquement isolant que l'on vient de décrire, on procède comme suit:

On commence par mélanger en parties sensiblement égales les deux composants de la matière précitée. Ce mélange doit être utilisé assez rapidement car il durcit en deux heures environ.

On projette le mélange obtenu sur le mur 1 en une ou plusieurs passes successives de façon à obtenir une couche 3 d'épaisseur comprise entre 1 et 5 mm suivant l'amplitude des inégalités de la surface du mur 1. Cette couche est adhérente et joue le rôle de pare-vapeur grâce à son étanchéité.

Sans attendre le durcissement de cette couche 3, on applique sur celle-ci les plaques de polystyrène expansé 2 en laissant entre les bords de celles-ci des interstices 5, de largeur égale à 1 ou 2 cm environ. Ces interstices 5 peuvent éventuellement être ajustés avec précision, au moyen de cales disposées par endroits entre les plaques 2.

On projette ensuite de la matière des ces interstices 5 de façon à les remplir complètement et dans le même geste on projette également cette matière sur la surface extérieure des plaques 2, de façon à les recouvrir d'une couche 4 d'épaisseur comprise entre 1 et 6 mm environ.

Le revêtement ainsi obtenu est complètement durci en quelques heures après le commencement de l'opération.

Ce durcissement est obtenu par la réaction de prise du plâtre en présence de l'eau. Lors de ce durcissement, l'agent anionique (constitué par le lauryl-éthersulfate de sodium) réagit sur l'éthyl-hexyl-sulfate de soude en formant des bulles gazeuses emprisonnées dans la matière qui réalisent une expansion de celle-ci et lui confèrent une structure à alvéoles fermés.

Cette structure alvéolaire confère à la matière des propriétés d'isolation thermique remarquables, une élasticité et une excellente résistance mécanique telles que cette matière encaisse les variations dimensionnelles des plaques de polystyrène dues aux variations de température et évite ainsi la fissuration de la couche extérieure 4, sans qu'il soit nécessaire de renforcer celle-qui par une armature telle qu'un tissu de fibres de verre.

Le revêtement ainsi obtenu présente non seulement un excellent pouvoir d'isolation thermique mais fournit également une isolation phonique et possède une très bonne résistance au vieillissement causé par les intempéries notamment le gel, et le rayonnement solaire, etc.

Le procédé conforme à l'invention, assure également la fixation autonome des plaques isolantes, la matière adhésive appliquée sur les surfaces intérieure et extérieure et entre les plaques, conférant au revêtement une excellente résistance mécanique qui garantit une grande sécurité de longévité.

Le procédé selon l'invention permet en outre d'effectuer des réparations locales affectant une ou plusieurs plaques sans influencer l'ensemble du revêtement.

Par ailleurs, la matière adhésive confère au revêtement une excellente résistance mécanique aux chocs et une très bonne étanchéité vis-à-vis des intempéries.

Bien entendu, l'invention n'est pas limitée à l'exemple que l'on vient de décrire et on peut apporter à celui-ci de nombreuses modifications, sans sortir du cadre de l'invention.

Ainsi, les plaques 2 peuvent être remplacées par une matière expansée autre que le polystyrène expansé, telle que la mousse de polyuréthane rigide, le verre expansé ou la laine de roche.

Par ailleurs, le plâtre contenu dans la matière des couches 3 et 4 peut être remplacé ou mélangé avec tout autre liant hydraulique durcissant en présence d'eau, tel que du ciment.

Bien entendu, on peut incorporer dans la couche extérieure 4 un pigment coloré pour obtenir la coloration désirée ou des grains de pierre pour donner au revêtement un aspect granité analogue à celui des revêtements classiques.

Les plaques 2 peuvent également être collées au mur 1 à isoler par des plots régulièrement répartis de matière adhésive identique ou différente de celle constituant l'entourage et le recouvrement extérieur des plaques.

Un vide d'air pourrait ainsi dans certains cas être ménagé entre le mur 1 et les plaques 2.

Bien entendu, le revêtement selon l'invention peut également être appliqué sur la face intérieure des murs. De plus, le revêtement peut être peint après finition.

**Revendications**

1. Revêtement thermiquement isolant appliqué contre l'extérieur ou l'intérieur des murs (1) de bâtiments, comprenant des plaques (2) en matière isolante, fixées aux murs (1) par une couche (3) de matière adhésive comprenant une résine synthétique et au moins un liant hydraulique, ces plaques (2) étant recouvertes à l'extérieur par une autre couche (4) de cette matière, caractérisé en ce que cette matière comprend des composés capables de lui conférer une élasticité et une résistance mécanique suffisantes pour encaisser les variations dimensionnelles des plaques (2) et en ce que cette matière remplit également les interstices (5) compris entre les bords adjacents des plaques (2) de façon à encadrer les plaques et à relier directement le mur, les plaques et la couche extérieure.

2. Revêtement thermiquement isolant conforme à la revendication 1, caractérisé en ce que les plaques (2) sont constituées par du polystyrène ou du verre expansé.

3. Revêtement thermiquement isolant conforme à l'une quelconque des revendications 1 ou 2, caractérisé en ce que ladite matière comprend des composés qui, au moment de l'application de cette matière réagissent ensemble pour former des bulles de gaz occluses dans cette matière.

4. Revêtement thermiquement isolant conforme à la revendication 3, charactérisé en ce que lesdits composés sont constitués par un agent anionique et un alkyl-sulfate.

5. Revêtement conforme à l'une quelconque des revendications 3 ou 4, caractérisé en ce que ladite matière comprend un mélange de résine synthétique, de lauryl-éther-sulfate de sodium et d'eau qui est additionné au moment de l'emploi par un mélange de plâtre et d'éthyl-hexyl-sulfate de soude.

6. Procédé pour réaliser le revêtement thermiquement isolant, conforme à l'une quelconque des revendications 1 à 5, caractérisé en ce qu'on applique une couche (3) de ladite matière sur les murs (1) du bâtiment, on pose les plaques (2) en matière isolante contre cette couche, en laissant des interstices (5) entre les bords des plaques (2), on remplit ces interstices par cette matière et sans interruption, on recouvre la surface extérieure des plaques (2) par une couche (4) constituée de cette matière.

7. Procédé conforme à la revendication 6, caractérisé en ce que la matière est appliquée par projection.

8. Procédé conforme à l'une quelconque des revendications 6 ou 7, dans lequel on utilise la matière conforme à l'une quelconque des revendications 3 à 5, caractérisé en ce que la matière est appliquée peu de temps après mise en présence des composés réagissant ensemble pour former des bulles de gaz.

**Patentansprüche**

1. Wärmeisolierender Belag, der gegen die Außenseite oder Innenseite von Gebäudemauern (1) angelegt wird, mit Platten (2) aus Isoliermaterial, die an den Mauern (1) über eine Schicht (3) aus einem Klebermaterial befestigt sind, welches ein synthetisches Harz und wenigstens ein hydraulisches Bindemittel enthält, wobei diese Platten (2) auf ihrer Außenseite durch eine weitere Schicht (4) aus diesem Material bedeckt sind, dadurch gekennzeichnet, daß dieses Material Verbindungen umfaßt, die geeignet sind, um ihm eine ausreichende Elastizität und mechanische Festigkeit zu verleihen, damit die Dimensionsvariationen der Platten (2) aufgefangen werden, und daß dieses Material ferner die Zwischenräume (5) ausfüllt, die zwischen den einander angrenzenden Rändern der Platten (2) gebildet sind, so daß es die Platten umrahmt und die Wand, die Platten und die Außenschicht direkt miteinander verbindet.

2. Wärmeisolierender Belag nach Anspruch 1, dadurch gekennzeichnet, daß die Platten (2) aus Polystyrol oder expandiertem Glas gebildet sind.

3. Wärmeisolierender Belag nach Anspruch 1 oder 2, dadurch gekennzeichnet, daß das Material Verbindungen umfaßt, die zum Zeitpunkt des Aufbringens dieses Materials miteinander reagieren, um Glasbläschen zu bilden, welche in diesem Material enthalten sind.

4. Wärmeisolierender Belag nach Anspruch 3, dadurch gekennzeichnet, daß die genannten Verbindungen aus einem anionischen Mittel und einem Alkylsulfat gebildet sind.

5. Belag nach einem der Ansprüche 3 und 4, dadurch gekennzeichnet, daß das Material eine Mischung aus synthetischem Harz, Natriumlauryläthersulfat und Wasser umfaßt, mit Zusatz eines Gemisches aus Gips und Äthylenhexylsulfatnatron zum Zeitpunkt der Verwendung.

6. Verfahren zur Herstellung des wärmeisolierenden Belags nach einem der Ansprüche 1 bis 5, dadurch gekennzeichnet, daß eine Schicht (3) des genannten Materials auf die Wände (1) des Gebäudes aufgebracht wird, die Platten (2) aus Isoliermaterial gegen diese Schicht angelegt werden, wobei Zwischenräume (5) zwischen den Rändern der Platten (2) verbleiben, diese Zwischenräume mit demselben Material und ohne Unterbrechung ausgefüllt werden, die Außenoberfläche der Platten (2) durch eine Schicht (4) aus demselben Material bedeckt werden.

7. Verfahren nach Anspruch 6, dadurch gekennzeichnet, daß das Material durch Aufsprühen aufgebracht wird.

8. Verfahren nach Anspruch 6 oder 7, bei welchem das Material nach einem der Ansprüche 3 bis 5 verwendet wird, dadurch gekennzeichnet, daß dieses Material kurze Zeit nach dem Einbringen der miteinander zur Bildung von Glasbläschen reagierenden Verbindungen aufgebracht wird.

## Claims

1. A heat-insulating covering applied against the external or internal surface of walls (1) of building, comprising plates (2) of insulating material bonded to the walls (1) by means of a layer of adhesive material comprising a synthetic resin and at least one hydraulic binder, said plates (2) being covered externally with another layer (4) of said material, characterized in that said material comprises compounds which are capable of endowing it with a sufficient degree of elasticity and mechanical strength to accommodate dimensional variations of the plates (2) and in that said material also fills the interstices (5) which are left between the adjacent edges of the plates (2) so as to form a frame around said plates and to provide a direct connection between the wall and the outer layer.

2. A heat-insulating covering according to claim 1, characterized in that the plates (2) are constituted by polystyrene or expanded glass.

3. A heat-insulating covering according to claim 1 or claim 2, characterized in that said material comprises compounds which react with each other at the moment of application of said material so as to form gas bubbles which are occluded within said material.

4. A heat-insulating covering according to claim 3, characterized in that said compounds are constituted by an anionic agent and an alkylsulfate.

5. A heat-insulating covering according to claim 3 or claim 4, wherein said material comprises a mixture of synthetic resin, of sodium lauryl-ether-sulfate and water to which is added a micture of plaster and sodium ethylhexyl sulfate at the moment of use.

6. A method of forming the heat-insulating covering according to any of claims 1 to 5, characterized in that a layer (3) of said material is applied to the walls (1) of a building, the plates (2) of insulating material are placed against said layer so as to ensure that interstices (5) are left between the edges of the plates, said interstices are filled with said material and without interruption the external surface of the plates (2) is covered with a layer (4) consisting of said material.

7. A method according to claim 6, characterized in that the material is applied by spraying.

8. A method according to claim 6 or claim 7, characterized in that the material according to claim 3 or claim 5 is employed, wherein said material is applied shortly after incorporating the compounds which react with each other so to form gas bubbles.

FIG_1

FIG_2